# EUROPÄISCHE PATENTSCHRIFT

(11) **EP 1 269 358 B1**
(45) Veröffentlichungstag und Bekanntmachung des Hinweises auf die Patenterteilung: **30.05.2007**
(21) Anmeldenummer: 00926791.5
(22) Anmeldetag: 01.04.2000
(51) Int. Cl.: G06F 17/40

(54) **VERFAHREN UND SYSTEM ZUR ERFASSUNG UND SPEICHERUNG VON DATEN AUS EINER PRODUKTIONSANLAGE**
METHOD AND SYSTEM FOR RECORDING AND SAVING DATA FROM A PRODUCTION PLANT
SYSTEME ET PROCEDE POUR SAISIR ET MEMORISER DES DONNEES D'UNE INSTALLATION DE PRODUCTION

(43) Veröffentlichungstag der Anmeldung: 02.01.2003
(73) Patentinhaber: ABB RESEARCH LTD., 8050 Zürich (CH)
(72) Erfinder: SZÖKE, Szaniszlo, B-5340 Gesves (BE); VOLLMAR, Gerhard, D-67149 Meckenheim (DE)
(74) Vertreter: Miller, Toivo
(86) Internationale Anmeldenummer: PCT/EP2000/002929
(87) Internationale Veröffentlichungsnummer: WO 2001/075685

(56) Entgegenhaltungen:
- DE-A- 3 614 331
- GB-A- 2 313 457
- US-A- 4 748 573

## Beschreibung

Die Erfindung bezieht sich auf ein Verfahren und ein System zur Erfassung und Speicherung von Daten aus einer Produktionsanlage zur Bereitstellung relevanter Daten für eine Fehleranalyse.

In Industriebetrieben ist es zunehmend üblich, die speicherprogrammierbare Steuerung einer Produktionsanlage mit einer Datenverarbeitungseinrichtung zu verbinden, um Daten für unterschiedliche Auswertungen oder Aktivitäten zu erfassen. Beispielsweise um Ursachen häufiger Maschinenstillstände herauszufinden, Produktionskosten zu ermitteln oder Verluste zu verringern.

Zum Zweck der Datenerfassung für Fehleranalysen ist die Verwendung von Verfahren mit Signalaufzeichnung (signal recording) üblich, sowie auch von Verfahren zur Aufzeichnung von Ergebnissen einer Signalverarbeitung (results recording).

Signal recording wird hauptsächlich eingesetzt zur Systemüberwachung, wobei eine hohe Zahl von Signalen in Echtzeit erfaßt wird. Dabei ist eine hohe zeitliche Auflösung möglich. Nachteilig ist allerdings, daß Fehlersituationen erst nach einer aufwendigen Analyse erkannt werden können. Es muß oftmals eine große, während eines relativ großen Zeitraums erfaßte Datenmenge analysiert werden, da einem Maschinenstillstand beispielsweise ein ursächliches Ereignis mehrere Stunden vorausgegangen sein kann.

Results recording wird in Verbindung mit spezieller Fehleranalyse-Software benutzt. Dabei erfolgt eine Auswertung von Signalen in Echtzeit, und kumulierte Ergebnisdaten werden quasi in Echtzeit gespeichert. Beispielsweise können so kumulierte Daten aus einem vorgegeben Abschnitt der Betriebsdauer, insbesondere einer Arbeitsschicht, gespeichert werden. Vorteile der Methode bestehen darin, daß jeweils nur kleine Datenmengen erfaßt werden, die mit kleinem Aufwand lange Zeit gespeichert werden können, und daß eine Analyse der Aufzeichnungen sehr schnell durchführbar ist, weil die aufwendige Signalanalyse schon erledigt ist. Nachteilig ist aber, daß nur integrierte Ergebnisse aus vorher definierten Zeitabschnitten verfügbar sind. Daher können später nicht andere Zeitabschnitte für eine ausführliche Analyse gewählt werden, beispielsweise eine Periode, in der ein Fehlerereignis eingetreten ist.

Der Erfindung liegt daher die Aufgabe zugrunde, ein Verfahren und ein System zur verbesserten Erfassung und Bereitstellung von Produktionsdaten anzugeben.

Diese Aufgabe wird durch ein Verfahren zur Erfassung und Speicherung von Daten aus einer Produktionsanlage gelöst, das die im Anspruch 1 angegebenen Merkmale aufweist. Ein entsprechendes System sowie vorteilhafte Ausgestaltungen sind in weiteren Ansprüchen angegeben.

Mit der Erfindung wird im wesentlichen vorgeschlagen, nur solche Signale mittels einer Skript-Sprache zu erkennen und zu speichern, die für definierte Zwecke, insbesondere zur graphischen Darstellung produktionsrelevanter Sachverhalte benötigt werden. Es werden weder große Datenmengen, noch kumulierte Daten gespeichert, und somit Nachteile bekannter Vorgehensweisen vermieden.

Eine weitere Beschreibung der Erfindung erfolgt nachstehend anhand eines Ausführungsbeispiels, das in Zeichnungsfiguren dargestellt ist.

Es zeigt:
- Fig. 1: eine Anordnung zur Datenerfassung und Bereitstellung,
- Fig. 2: Ablaufschritte des erfindungsgemäßen Verfahrens,
- Fig. 3: eine Datenbankstruktur, und
- Fig. 4: ein Ereignisskript.

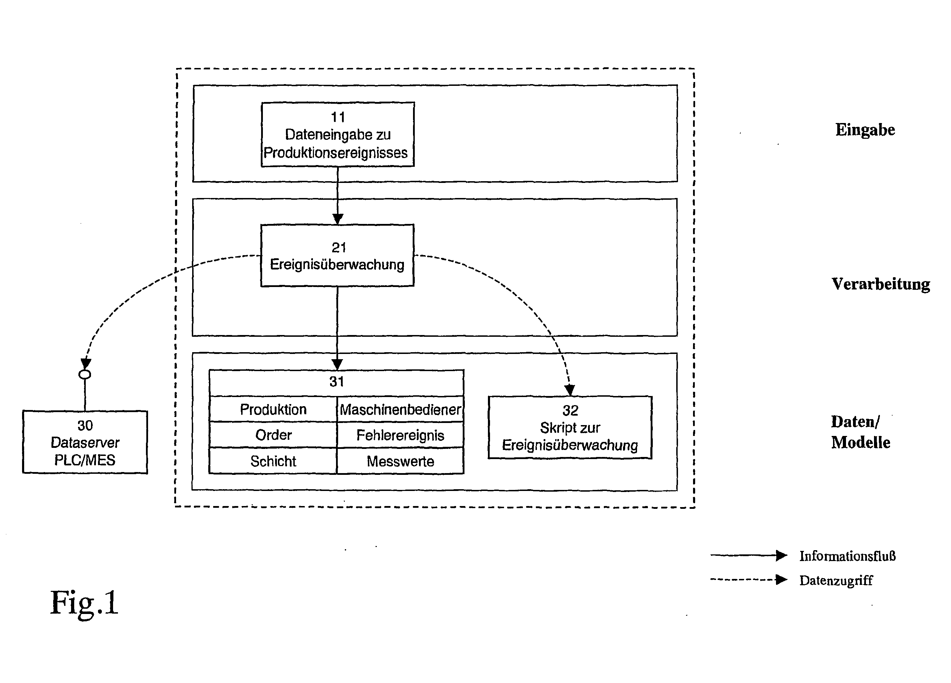

Fig. 1 zeigt Funktionseinheiten eines Systems, wobei in einer Produktionsanlage erfaßte Signale in einem Datenserver 30 einer speicherprogrammierten Steuerung (PLC/MES) zwischengespeichert werden. Mittels einer Dateneingabe 11 sind Daten zu Produktionsereignissen als Zusatzinformationen durch einen Bediener eingebbar. Die Dateneingabe 11 ist mit einer Ereignisüberwachung 21 verbunden, die außerdem Zugriff auf die im Datenserver 30 gespeicherten Signale hat. Die Ereignisüberwachung 21 hat zusätzlich Zugriff auf einen Skript-Speicher 32, in dem ein oder mehrere Skripts zur Ereignisüberwachung abgelegt sind. Die Ereignisüberwachung 21 ist dafür eingerichtet, zyklisch, z.B. nach jeweils 5 s, eine Auswertung von Signalen gemäß Überwachungskriterien durchzuführen, die im jeweiligen Skript enthalten sind, und- je nach erkanntem Fehlerereignis - Daten in unterschiedlichen Datenbanken 31 zu speichern.

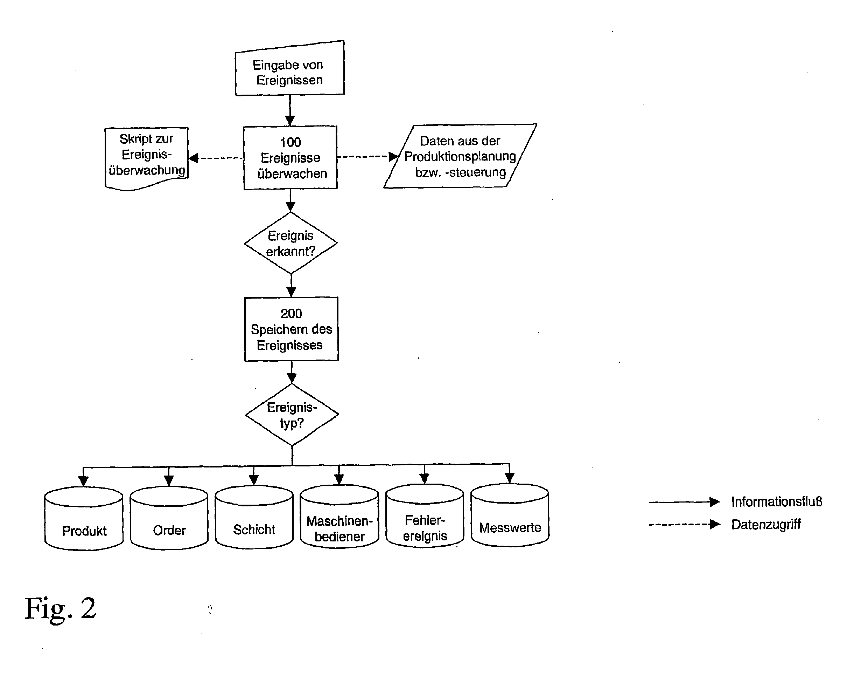

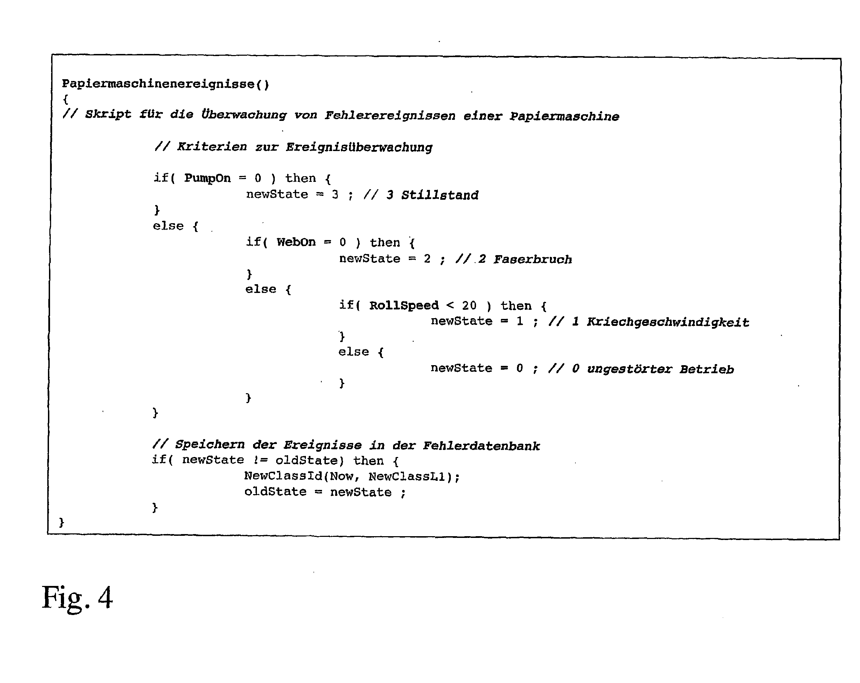

Fig. 2 zeigt verfahrensgemäße Schritte zur Erfassung und Speicherung von Daten aus einer Produktionsanlage. In Schritt 100 werden Produktionsdaten ausgewertet, die der Datenserver 30 bereitstellt oder die mit der Dateneingabe 11 eingegeben sind. Die Auswertung wird zyklisch durch die Ereignisüberwachung 21 vorgenommen. Die dazu benötigten Überwachungskriterien werden dem Skript zur Ereignisüberwachung entnommen. Ein solches Skript ist in Fig. 4 beispielhaft als Skript zur Überwachung von Fehlerereignissen einer Papiermaschine gezeigt.

Wird ein Ereignis erkannt, werden in Schritt 200 die Daten je nach Ereignistyp in unterschiedlichen Datenbanken 31 gespeichert. Die Anweisung welche Daten in welcher Datenbank gespeichert werden müssen, werden dem Skript zur Ereignisüberwachung entnommen.

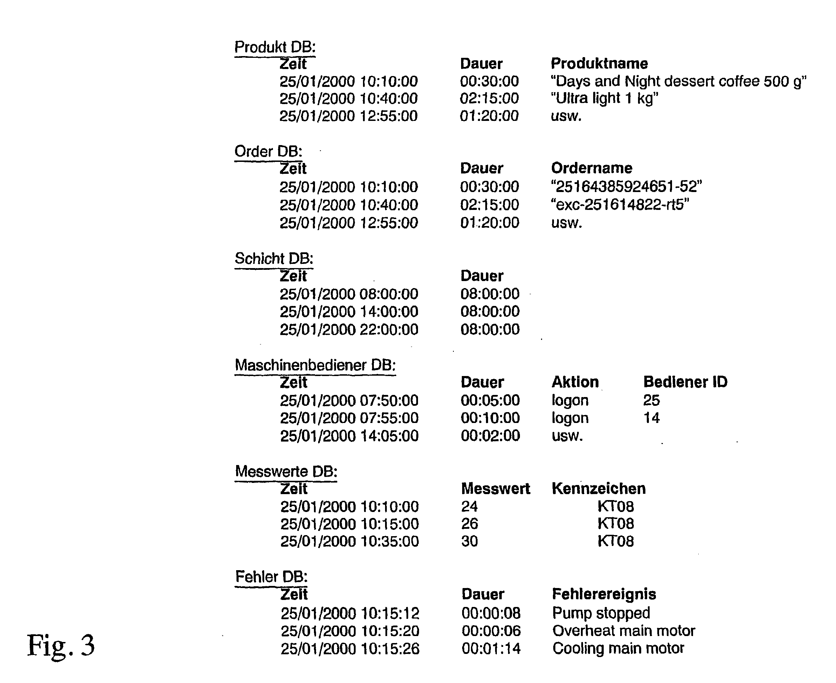

Fig. 3 zeigt beispielhaft die Struktur der Datenbanken 31 für Produkt, Order, Schicht, Maschinenbediener, Meßwerte und Fehlerereignisse. In der Produktdatenbank werden Produktionsbeginn eines Produktes, die Produktionsdauer sowie Produktname gespeichert. In der Orderdatenbank werden Beginn der Order, Dauer und Orderbezeichnung gespeichert. In der Schichtdatenbank werden Beginn der Schicht und Dauer der Schicht gespeichert. In der Maschinenbedienerdatenbank werden Beginn der Bedieneraktion, Dauer und Bezeichnung der Aktion sowie Bediener-Identnummer gespeichert. In der Meßwertedatenbank werden analoge Meßsignale mit Zeitstempel, Kennzeichnung und Meßwert gespeichert. In der Fehlerdatenbank werden für ein Fehlerereignis die Bezeichnung des Ereignisses, Beginn des Auftretens und die Dauer des Fehlerereignisses gespeichert.

Figur 4 zeigt beispielsweise das Ereignisskript für das Erkennen von Papiermaschinenfehler. Für das Erstellen eines Skriptes stehen spezielle Sprachkonstrukte bereit. Wesentliche Sprachkonstrukte für die Ereignisüberwachung sind Zugriffsfunktionen auf analoge und binäre Signale des Steuerungssystems, Zustandsvergleiche von Variablen, sowie Speicheranweisungen für das gezielte Ablegen von Informationen in den unterschiedlichen Datenbanken.

## Patentansprüche

1. Verfahren zur Erfassung und Speicherung von Daten aus einer Produktionsanlage zur Bereitstellung relevanter Daten für eine Fehleranalyse, wobei
a) messtechnisch erfasste Produktionsdaten in einem Datenserver (30) der Produktionsanlage zwischengespeichert werden,
b) von einem Bediener mittels einer Dateneingabe (11) in eine Datenverarbeitungseinrichtung Zusatzinformationen eingegeben werden,
c) außerdem Ereignisse, deren Eintreten zu überwachen ist, in die Datenverarbeitungseinrichtung eingegeben und in Form wenigstens eines Skripts abgelegt werden, und
d) in einem ersten Ablaufschritt (100) mittels einer Funktionseinheit Ereignisüberwachung (21) der Datenverarbeitungseinrichtung eine Auswertung von Produktionsdaten durchgeführt wird, wobei die Ereignisüberwachung (21) aufgrund von Überwachungskriterien, die im wenigstens einen gespeicherten Skript enthalten sind, auf Produktions-daten im Datenserver (30) sowie auf die Zusatzinformationen zugreift und ermittelt, ob eines von mehreren vordefinierten Ereignissen eingetreten ist, und
e) in einem zweiten Ablaufschritt (200) zu einem im ersten Ablaufschritt als eingetreten erkannten Ereignis gehörige Produktionsanlage gemäß einer im wenigstens einen Skript enthaltenen Anweisung abhängig von den Ereignissen in einer von mehreren unterschiedlichen Vorgangsabhängigen Datenbanken (31) speichert.

2. System zur Erfassung und Speicherung von Daten aus einer Produktionsanlage zur Bereitstellung relevanter Daten für eine Fehleranalyse, wobei
a) der Produktionsanlage ein Datenserver (30) zugeordnet ist, mit dessen Hilfe messtechnisch erfasste Produktionsdaten zwischengespeichert werden,
b) eine Datenverarbeitungseinrichtung vorhanden und dafür eingerichtet ist, mittels einer Dateneingabe (11) Zusatzinformationen, die ein Bediener eingibt, zu erfassen,
c) die Datenverarbeitungseinrichtung einen Skript-Speicher (32) enthält, in dem wenigstens ein Skript zur Ereignisüberwachung gespeichert ist, und
d) die Datenverarbeitungseinrichtung eine Funktionseinheit Ereignisüberwachung (21) enthält, mit der Daten aus dem Datenserver (30) abrufbar und mit den Zusatzinformationen aus der Dateneingabe (11) verknüpfbar sind, und die außerdem dafür eingerichtet ist,
- Zyklisch aufgrund von Überwachungskriterien, die im wenigstens einen gespeicherten Skript enthalten sind, zu ermitteln, ob eines von mehreren vordefinierten Ereignissen eingetreten ist, und
- falls ein solches Ereignis eingetreten ist, jeweils eine Datenaufzeichnung vorzunehmen, wobei - abhängig von der jeweiligen Ereignisart - eine Datenspeicherung von zu dem als eingetreten erkannten Ereignissen gehörigen Produktionsdaten in einer von mehreren vorgangsabhängigen Datenbanken (31) erfolgt.

3. System nach Anspruch 2, **dadurch gekennzeichnet, dass** sechs vorgangsabhängige Datenbanken (31) vorhanden sind, nämlich für
- Herstellung eines bestimmten Produkts,
- einen bestimmten Auftrag,
- eine Arbeitsschicht,
- Bediener-An- und -Abmeldung,
- Datenerfassung für eine beabsichtigte Anzeige,
- Produktionsausfall oder andere Ereignisse.

4. System nach einem der Ansprüche 2 oder 3, **dadurch gekennzeichnet, dass** die Datenverarbeitungseinrichtung dafür eingerichtet ist, graphische Darstellungen von produktionsrelevanten Sachverhalten unter Zugriff auf Daten der vorgangsabhängigen Datenbanken (31) zu erstehen.

## Claims

1. Method for acquiring and storing data from a production plant in order to provide relevant data for a fault analysis, where
a) production data acquired by measurement are buffered in a data server (30) for the production plant,
b) an operator inputs additional information into a data processing device by means of a data input (11),
c) additionally, events whose occurrence needs to be monitored are input into the data processing device and are stored in the form of at least one script, and
d) in a first execution step (100), an event monitoring (21) functional unit of the data processing device is used to cyclically evaluate production data, the event monitoring system (21) taking monitoring criteria which the at least one stored script contains as a basis for accessing production data in the data server (30) and the additional information and ascertaining whether one of a number of predefined events has occurred, and
e) in a second execution step (200), storing production data associated with an event, identified in the first execution step as having occurred, in one of a number of different procedure-dependent databases (31) in line with an instruction which the at least one script contains on the basis of the type of event.

2. System for acquiring and storing data from a production plant in order to provide relevant data for a fault analysis, where
a) the production plant is assigned a data server (30), with the aid of which production data acquired by measurement are buffered,
b) there is a data processing device which is set up to acquire additional information, which an operator inputs by means of a data input (11),
c) the data processing device contains a script memory (32), in which at least one script relating to event monitoring is stored, and
d) the data processing device contains an event monitoring (21) functional unit, with which data can be called up from the data server (30) and can be linked with the additional information from the data input (11), and which is additionally set up
- to determine, cyclically on the basis of monitoring criteria which the at least one stored script contains, whether one of a number of predefined events has occurred, and
- if such an event has occurred, in each case to perform data recording, with production data associated with the event identified as having occurred being stored in one of a number of procedure-dependent databases (31), depending on the respective type of event.

3. System according to Claim 2, **characterized in that** there are six procedure-dependent databases (31), specifically for
- the production of a specific product,
- a specific job,
- a working shift,
- operator logging on and logging off,
- data acquisition for an intended display,
- production loss or other events.

4. System according to either of Claims 2 or 3, **characterized in that** the data processing device is set up to compile graphic displays of production-relevant facts, with access to data from the procedure-dependent databases (31).

## Revendications

1. Procédé de saisie et de sauvegarde de données provenant d'une installation de production, afin de fournir des données pertinentes pour l'analyse d'une erreur, dans lequel
a) des données de production recueillies par un moyen métrologique sont sauvegardées temporairement dans un serveur de données (30) de l'installation de production,
b) un opérateur, sur une unité de saisie de données (11), saisit des informations additionnelles dans un équipement de traitement de données,
c) des événements dont la survenance doit être surveillée sont en outre saisis dans l'équipement de traitement de données et sont sauvegardés sous la forme d'au moins un script,
d) dans une première étape de processus (100), à l'aide d'une unité fonctionnelle de surveillance d'événements (21) de l'équipement de traitement de données, une analyse des données de production est réalisée cycliquement, l'unité de surveillance d'événements (21) accédant à des données de production dans le serveur de données (30) et aux informations additionnelles sur la base de critères de surveillance contenus dans au moins un script sauvegardé, et déterminant si l'un d'une pluralité d'événements prédéfinis s'est produit, et
e) dans une deuxième étape de processus (200), des données de production appartenant à un événement détecté comme survenu dans la première étape de processus sont sauvegardées, en fonction de la nature de l'événement, dans l'une d'une pluralité de différentes banques de données associées à la procédure, selon une instruction contenue dans au moins un script.

2. Système de saisie et de sauvegarde de données provenant d'une installation de production, afin de fournir des données pertinentes pour l'analyse d'une erreur, dans lequel
a) un serveur de données (30) est associé à l'installation de production afin de sauvegarder temporairement des données de production recueillies par un moyen métrologique,
b) il est prévu un équipement de traitement de données qui est conçu pour recueillir, à l'aide d'une unité de saisie de données (11), des informations additionnelles saisies par un opérateur,
c) l'équipement de traitement de données comporte une mémoire de scripts (32) dans laquelle est sauvegardé au moins un script de surveillance d'événements, et
d) l'équipement de traitement de données comporte une unité fonctionnelle de surveillance d'événements (21) grâce à laquelle des données peuvent être consultées dans le serveur de données (30) et reliées aux informations additionnelles provenant de l'unité de saisie de données (11) et qui, en outre, est conçue afin de
- déterminer cycliquement, sur la base de critères de surveillance contenus dans au moins un script sauvegardé, si l'un d'une pluralité d'événements prédéfinis s'est produit et
- si un tel événement s'est produit, réaliser un enregistrement de données, l'enregistrement de données de production appartenant à l'événement détecté comme survenu s' effectuant - en fonction de la nature de l'événement dans l'une d'une pluralité de différentes banques de données (31) associées à la procédure.

3. Système selon la revendication 2, **caractérisé en ce qu'**il est prévu six banques de données (31) associées à la procédure, à savoir :
- fabrication d'un produit déterminé,
- commande déterminée,
- équipe de travail,
- ouverture et fermeture de session par les opérateurs,
- saisie de données pour un affichage prévu,
- arrêt de production ou autres événements.

4. Système selon une des revendications 2 ou 3, **caractérisé en ce que** l'équipement de traitement de données est conçu pour produire des représentations graphiques de circonstances pertinentes pour la production, en accédant à des données des banques de données (31) associées à la procédure.
